# EUROPEAN PATENT SPECIFICATION

(11) **EP 2 179 550 B1**
(45) Date of publication and mention of the grant of the patent: **09.10.2013**
(21) Application number: 08796990.3
(22) Date of filing: 31.07.2008
(51) Int. Cl.: H04L 12/66, H04N 5/44, H04N 5/00

(54) **FAST CHANNEL CHANGE BETWEEN LOGICAL CHANNELS WITHIN A TRANPORT MULTIPLEX**
SCHNELLE KANALÄNDERUNG ZWISCHEN LOGISCHEN KANÄLEN IN EINEM TRANSPORT-MULTIPLEX
CHANGEMENT RAPIDE DE CANAL ENTRE CANAUX LOGIQUES AU SEIN D'UN MULTIPLEX DE TRANSPORT

(30) Priority: 31.07.2007 US 962781 P
(43) Date of publication of application: 28.04.2010
(73) Proprietor: Sirius Xm Radio Inc., New York, NY 10020 (US)
(72) Inventor: WARD, Laurence, Oliver, Lawrenceville, NJ 08648 (US)
(74) Representative: Burt, Matthew Thomas
(86) International application number: PCT/US2008/071819
(87) International publication number: WO 2009/018480

(56) References cited:
- WO-A1-00/57646
- US-A1- 2004 160 974
- US-A1- 2005 094 733
- US-A1- 2006 085 828
- US-B1- 6 490 001

## Description

### CROSS REFERENCE TO RELATED APPLICATIONS

This application claims the benefit of U.S. Provisional Patent Application No. 60/962,781 entitled "METHODS AND SYSTEMS FOR FAST CHANNEL CHANGE BETWEEN LOGICAL CHANNELS WITHIN A TRANSPORT MULTIPLEX", filed on July 31, 2007.

### TECHNICAL FIELD

The present invention relates to satellite broadcast communications, and more particularly to systems and methods to facilitate fast channel change between logical channels within a transport multiplex.

### BACKGROUND OF THE INVENTION

With the proliferation of video signals, such as, for example, in backseat video channels delivered via satellite to automobiles, it is in the interests of broadcasters and video player providers to enhance, to the extent possible, a user's viewing experience to gain market advantage, create goodwill, and associate a pleasant viewing experience with their services. One way to enhance a viewer's experience is to reduce wait times, such as those often encountered when a user changes channels.

What is thus needed in the art are methods and systems to reduce the amount of time it takes to acquire and display a tuned channel within a transport multiplex.

US 2005/0094733 A1 (Daniell) discloses a digital television having improved channel surging ability. The I and P frames of an MPEG transport scheme are buffered for as many program streams as memory permits. A pointer tracks the last I frame of each program stream in memory, and subsequent P frames are available in memory, meaning that channel changes are sped up as a P frame can begin a newly selected program stream.

### SUMMARY OF THE INVENTION

The present invention provides a method for fast channel change between logical channels within a transport multiplex, and a system for fast channel change between various channels within a transport multiplex, as defined in the appended claims.

### BRIEF DESCRIPTION OF THE DRAWINGS

Fig. 1 depicts a simplified system diagram of a conventional video player application without fast channel change;
Fig. 2 depicts the video player application of Fig. 1 augmented with an exemplary fast channel change system according to an exemplary embodiment of the present invention;
Figs. 3 and 3A illustrate exemplary packets and access units according to an exemplary embodiment of the present invention;
Fig. 4 illustrates an exemplary key frame parking algorithm according to an exemplary embodiment of the present invention;
Fig. 5 illustrates an exemplary overall process flow according to an exemplary embodiment of the present invention;
Fig. 5A illustrates an exemplary overall process flow according to an exemplary embodiment of the present invention;
Fig. 6 illustrates an exemplary detailed process flow for an initialization of streamer output sub-process according to an exemplary embodiment of the present invention;
Fig. 7 illustrates an exemplary detailed process flow diagram for a modification of streamer output sub-process according to an exemplary embodiment of the present invention; and
Fig. 8 illustrates detailed operation of an exemplary transport de-multiplexer according to an exemplary embodiment of the present invention.

### DETAILED DESCRIPTION OF THE INVENTION

A system, method and computer program product are provided for fast channel change between logical channels within a transport multiplex. Exemplary embodiments of the present invention can be used, for example, in connection with any broadcast video system, such as, for example, Sirius Satellite Radio's Backseat TV™ service. By reducing the amount of time required to acquire and display a tuned channel via fast channel change, a viewer's experience can be significantly enhanced. The beneficial effects of such technology increase with the number of channels provided, thus allowing users to flip through many channels and effectively instantaneously see what each channel is offering.

For ease of description of various exemplary embodiments of the present invention, a few definitions will be provided. A *logical channel* is a set of associated video, audio, and related data (such as, for example, closed captioning) to which a viewer can tune via their television or TV-like device. An *access unit* is the smallest logical unit of data which can be displayed, or played, as the case may be, by the aforementioned devices (such as, for example, a video frame, an audio frame, a datum of closed captioning data, *etc*.). *Packets* are the smallest logical units of data which can be conveniently transmitted in and recovered from a digital television signal and contain either whole access units or a piece or pieces of one or more access units. A *transport multiplex* is a stream of one or more logical channels in which the video, audio, and data access units have been encapsulated into packets (*i.e.,* packetized) and mixed together (*i.e., multiplexed*) for transmission. An *entry point* is any place in a stream of data for a particular channel where display may begin, such as for example, at a key frame in a video clip, such as, for example, an I-frame in an MPEG encoded video signal.

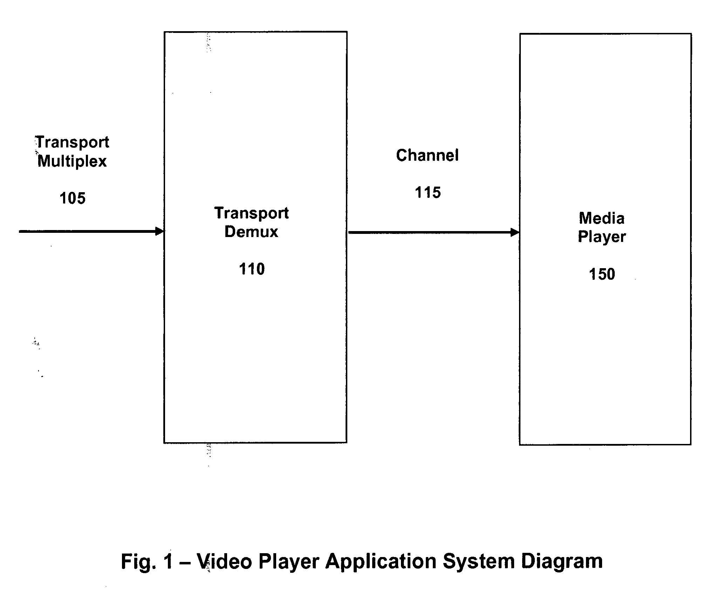

Fig. 1 depicts a simplified system diagram of an exemplary video player application without fast channel change. With reference thereto, a transport multiplex 105 is fed into a transport de-multiplexer 110. For convenience, a de-multiplexer will be sometimes referred to herein by the colloquial term "demux." Continuing with reference to Fig. 1, the transport demux 110 extracts the video, audio, and closed captioning packets which comprise a single channel 115 - the one that is currently tuned to by a user - within the transport multiplex and reconstructs access units from those packets. From there, the channel data 115 is fed into a media player 150, the software component which provides a control interface to the decoder hardware. The channel data 115 is passed into the media player 150 as a bundle of three separate streams (one for each of the video, audio, and closed captioning data) as necessitated by the internals of the decoder. Thus, in standard systems, the demux extracts only the channel data for one channel, and feeds only that data to the media player.

When a user tunes to a new channel, media player 150 is stopped, a new channel stream bundle is passed to the media player, and then the media player is started again. Stopping and starting media player 150 discards any remaining data (from the previously tuned channel) within the player, as the use of such data could result in visible or audible glitches on restart of the media player. There is generally no attempt to do splicing.

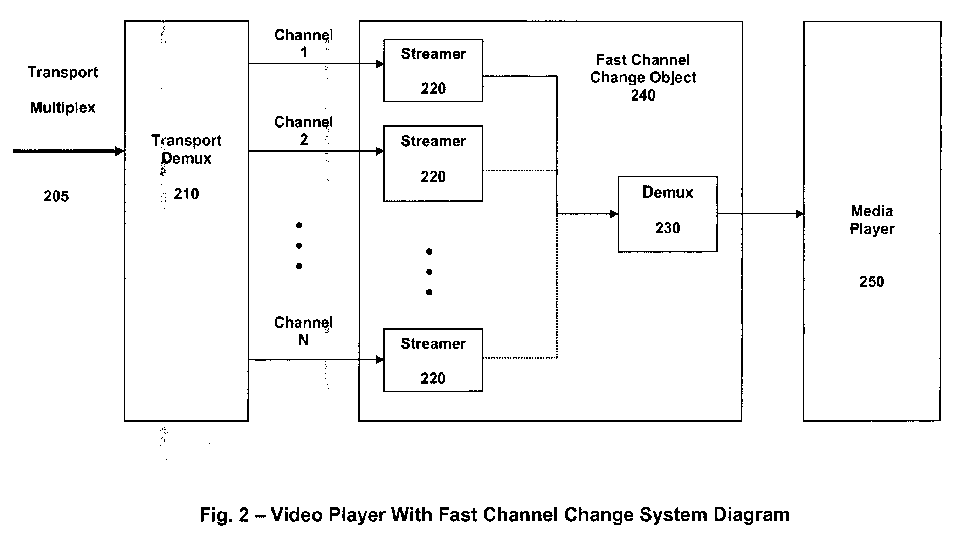

Fig. 2 depicts an exemplary video player application augmented with a fast channel change system according to an exemplary embodiment of the present invention. In the video player of Fig. 2 the transport demux 210 extracts the video, audio, and closed captioning packets which comprise all of the various channels within the transport multiplex 205. However, instead of extracting each channel's data as a bundle of three separate streams, the transport demux can, for example, export a single stream for each channel, shown as Channel 1, Channel 2 and Channel N in Fig. 2. Thus, the transport demux 210 can, for example, reconstruct all access units for the channel and send them out on the channel stream in the order that each access unit completes.

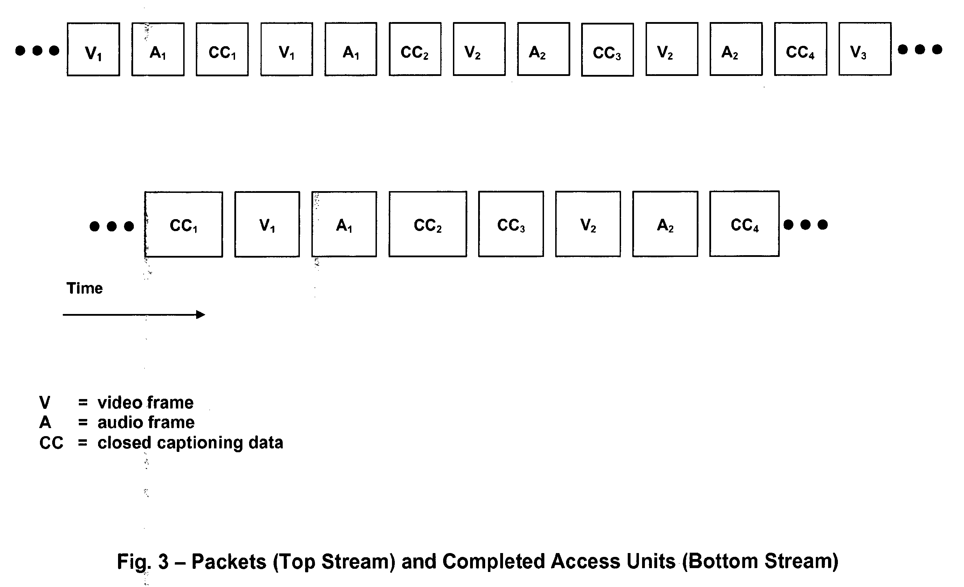

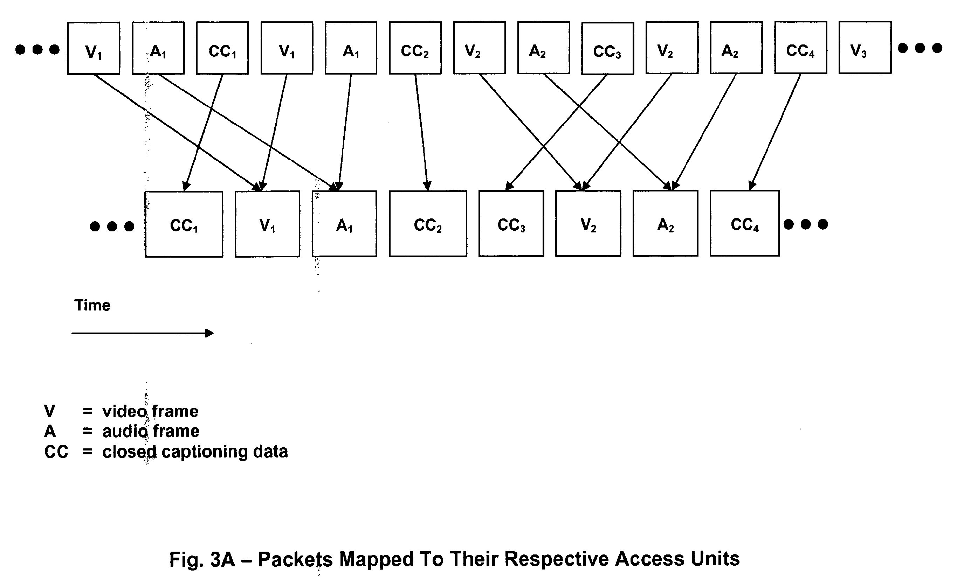

Fig. 3 depicts an example of the order in which access units can be reconstructed from packets for a given channel from the transport multiplex according to exemplary embodiments of the present invention. The top portion of the figure shows multiplexed packets and the bottom portion of the figure shows the ordered, reconstructed access units. As noted above, the order of the reconstructed access units sent on the channel stream by the transport demux is based on when the last piece of each access unit arrives at the transport demux, *i.e.,* the completion order of the access units: This order is necessary for fast channel switching due to the timing relationships between the video, audio, and closed captioning data. Fig. 3A indicates which packets are assigned to which access units in the example of Fig. 3, and the fact that an access unit is only output once all of its component packets have been received.

Returning to Fig. 2, each channel stream can be fed, for example, into a fast channel change object ("FCC Object") 240 where it can be, for example, handled by a streamer 220. A streamer 220 can, for example, read data from its input, possibly process the data, and then write the data to its buffered output. In exemplary embodiments according to the present invention, the streamer's processing can, for example, be in either of two modes, as next described.

In a first mode, called a *normal* mode, the channel is the one to which a receiver is currently tuned (*e.g.,* Channel 1 in Fig. 2). From that channel's streamer, channel data can be written to the streamer output starting at the first entry point the streamer encounters upon switching to this mode. The channel data can then, for example, be sent into a demux 230 to separate the data into video, audio, and closed captioning data streams (as required by the decoder) and then, for example, be sent to the media player 250. Alternatively, when interoperating with a media player that does not require a separate data stream for audio and video, such as, for example, Windows Media Player 9, the de-multiplexing at demux 230 is not needed. In a second mode, which can be called, for example, a ***parking*** mode, the streamer's channel is not the one to which the receiver is currently tuned (*e.g.,* any of Channel 2 through Channel N in Fig. 2). In such parking mode channel data is not written to the streamer output, but rather, the streamer can, for example, store sufficient data in its internal buffer so as to insure no underflow at the media player in the event of a channel change to that streamer's channel. In exemplary embodiments of the present invention, in parking mode the streamer can, for example, store data beginning at the first entry point the streamer encounters upon switching to this mode.

Thus, in exemplary embodiments of the present invention, FCC Object 240 operates as to each channel continuously, either in normal mode or in parking mode.

When switching channels, for example, media player 250 can be stopped, the newly tuned channel's streamer 220 can be placed in normal mode, the previously tuned channel's streamer 220 can be placed in parking mode, and, finally, the media player can be started again. Unlike conventional non-fast channel change devices, the data path to the media player (*i.e.,* from demux 230) remains unbroken.

In order to prevent the decoder from eventually starving - a condition called underflow - after a tune to its channel, a channel streamer in parking mode needs to maintain at least a certain amount of stored channel data. That minimum amount can be determined, for example, from buffering period information or coded packet buffer size present in the video data, or from system parameters such as, for example, media player data throughput for each channel.

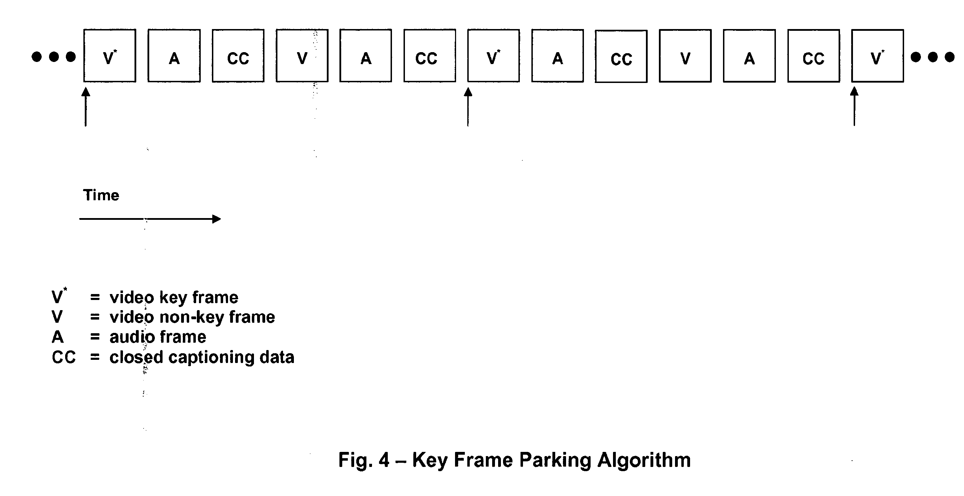

Fig. 4 illustrates how an exemplary parking algorithm can work to maintain the minimum amount of channel data in a given parked streamer according to an exemplary embodiment of the present invention. The arrows in Fig. 4 indicate the entry points for the corresponding channel. An entry point is a key frame, *i.e.,* one which allows the video signal to be displayed, thus a video frame that is not dependent upon earlier or later frames in order to be decoded. In MPEG a key frame is an I-frame, for example. Upon encountering an entry point, for example, a streamer's data processor can, for example, record the following information: (i) the entry point's starting position in the buffer; (ii) the minimum necessary amount of video data to store after the entry point; and (iii) how much non-key frame video data has been stored since the last entry point.

Upon encountering each successive entry point after the second one, inclusive, the algorithm seeks to maintain the minimum necessary amount of channel data in the streamer buffer by potentially discarding data stored previous to the entry point, starting at this latest entry point and working backwards to at most the second entry point. If the amount of video data (including both key frames and non-key frames) stored after the entry point (hence the need to keep track of the amount of non-video data stored between entry points) is sufficient to prevent underflow on a channel change, the data stored previous to the entry point is discarded. It is understood that such requisite minimum amount of data is in general channel specific, and thus needs to be determined for each channel.

Testing performed by the inventor has shown an improved average channel change time with fast channel change over conventional changing of channels without it. For example, in one test run on a multiplex with three video channels, where video was played in H.264 format and was MPEG encoded, a standard channel change involved six seconds before video from the newly changed channel appeared. When a fast channel change according to an exemplary embodiment of the present invention was implemented in the same system, the channel change delay was decreased to three seconds. Additionally, although exemplary embodiments of the present invention need to interoperate with particular media formats by definition, the fast channel change software's structure can be easily modified to handle any media format.

Because the present invention operates independently of how many channels are in a given multiplex, it is completely scalable to as many channels are desired, given a separate streamer with adequate buffering for each channel, and adequate channel capacity in a transport de-multiplexer or set of such transport de-multiplexers.

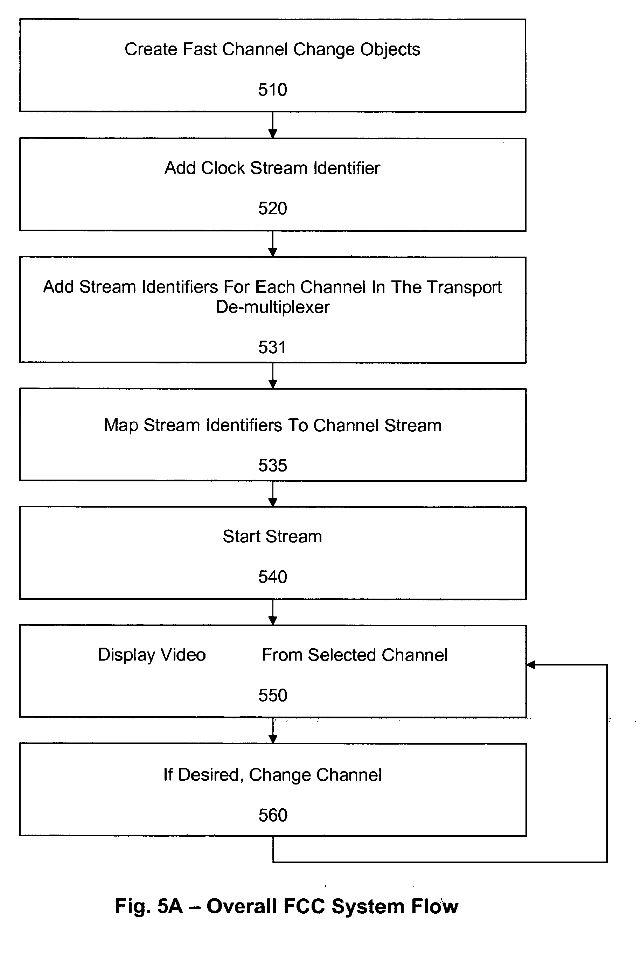

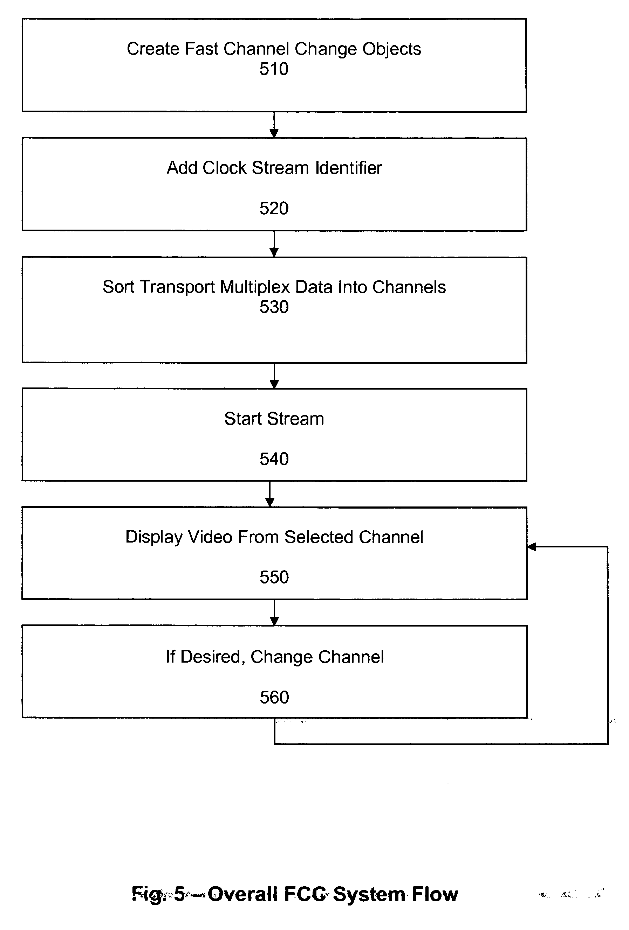

Figs. 5-8, next described, depict exemplary process flow in an exemplary embodiment of the present invention implemented in software, for a video player designed for H.264 format video, and for a transport multiplex containing three logical video channels. In exemplary embodiments of the present invention such exemplary software can be stored, for example, on a digital signal processor running the video.

Fig. 5 is an overall process flow diagram for an implementation of an exemplary embodiment of the present invention. Fig: 5A is a more detailed depiction of a particular exemplary implementation. With reference thereto, at 510 a fast channel change object can, for example, first be created. Next at 520, a clock stream identifier can, for example, be created to handle data from a clock and to synchronize the data. At 530 in Fig. 5, the transport multiplex data can be, for example, sorted into channel streams. In the specific exemplary embodiment shown in Fig. 5A, stream identifiers associated with each of audio, video and closed captioning streams can be used to select the data and then these streams can be mapped to a channel stream within a transport multiplexer. Thus, at 531 in Fig. 5A, stream identifiers can be used, for example, as a way to distinguish data, such as audio, video, and close captioning data for each channel, and then at 535 in Fig. 5A, these streams can be, for example, mapped to a single channel stream (which looks like the bottom stream of Fig. 3). By mapping to a channel stream, the effect is to order the data based on completion time.

At 540, a buffer can store the amount of data needed to prevent underflow. Also at 540, starting the streamer output, can, for example, place a selected channel in normal mode and the other channels in parking mode. As noted above, in normal mode a channel's output can be sent to the media player. After a certain event, such as, for example, reaching the minimum amount of channel data needed in the buffer or a change in the channel, the media player decodes the data and displays the video at 550. If a user desires to change the channel, at 560, the new channel can, for example, be placed in normal mode and the previous channel can be placed in parking mode. In exemplary embodiments of the present invention the order of the mode changes can be to set the newly selected channel in normal mode and then set the previously selected channel to parking mode, thus leaving a very slight overlap where both channels are in normal mode. This can, for example, prevent glitches in the video and audio. After placing the newly selected channel in normal mode and placing the previously selected channel in parking mode, the new channel can, for example, now be displayed at 550. In the depicted exemplary embodiment, the new channel stream is displayed as long as the user prefers (until the channel is changed or the system is shut off).

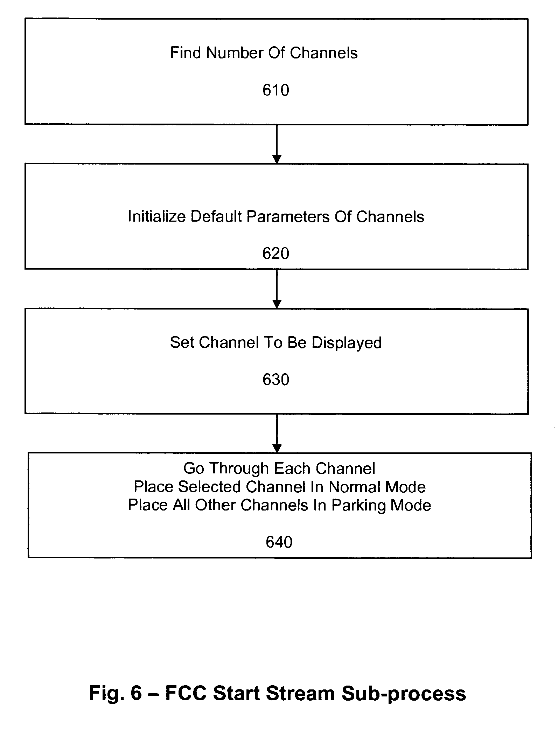

Fig. 6 is a detailed flow diagram for the initialization of streamer output sub-process shown at 540 in Figs. 5. At 610 the stream can start, for example, by determining the number of channels. In exemplary embodiments of the present invention, the channel list can be dynamic, thus allowing for addition and subtraction of channels. Alternate exemplary embodiments could use a static channel list, in which case determining the number of channels might not be necessary.

Next at 620, a set of values can, for example, be associated with each channel (such as the value of the channel number). At 630 a default or user inputted channel can then be selected to be the initial output to the media player. Using the value of the channel selected, at 640 each channel can, for example, be placed into either parking mode or normal mode. The output of the normal mode stream can then be sent to the media player.

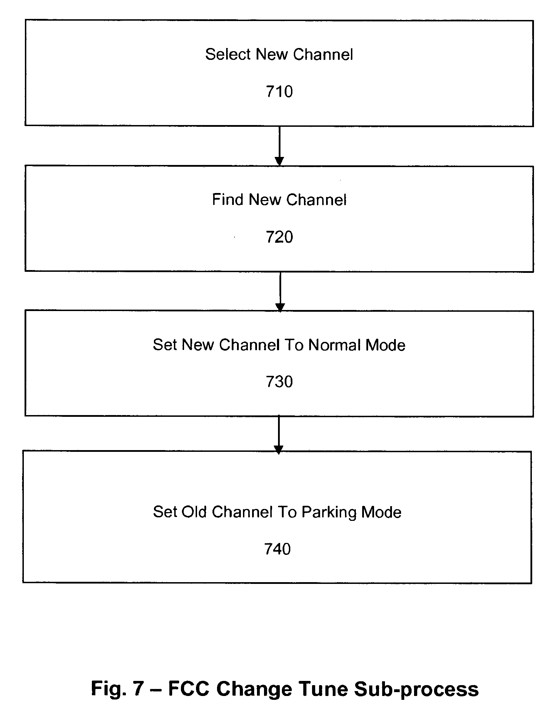

Fig. 7 depicts a detailed process flow diagram for the modification of streamer output sub-process illustrated at 560 in Fig. 5. At 710 a new channel, for example, can be selected by a user. At 720, the software can, for example, then locate the channel stream for the newly selected channel. In an exemplary embodiment, the software can locate the channel stream using a dynamically linked list. Therefore, the channel list can be updated dynamically, allowing for changes in the broadcast lineup. However, as noted, a static channel list can also be used, thus making searches for the channel stream in some instances faster. This can be done, for example, by using an array for access to the channel objects (streams) and a hashtable for lookup. Next at 730, the software can set the new channel to normal mode. At 740, the old channel can, for example, be set to parking mode. As noted, the order of the mode changes here can be important to prevent display glitches. The output of normal mode channel can then, for example, be sent to the media player.

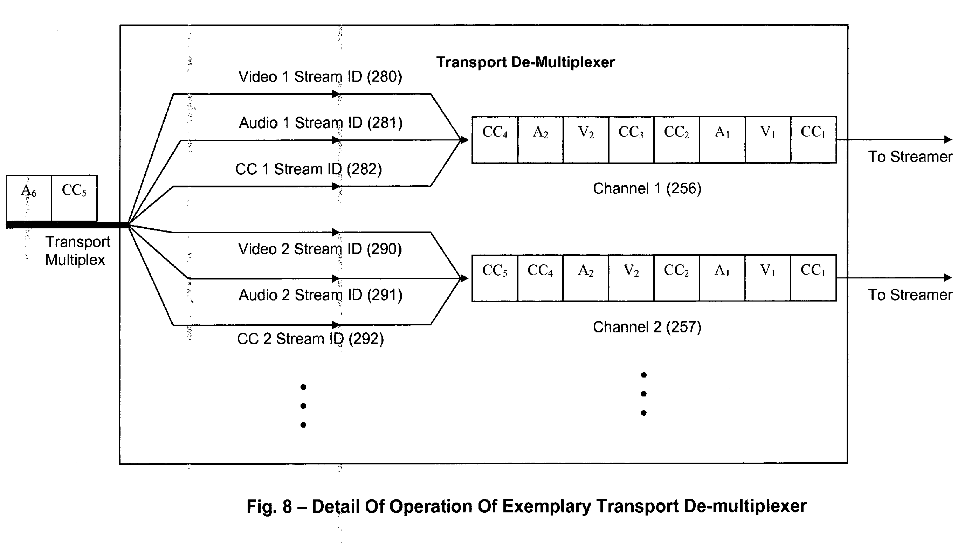

Fig. 8 illustrates an exemplary operation of a transport de-multiplexer, such as that shown at 210 in Fig. 2, for example, according to an exemplary embodiment of the present invention. With reference thereto, data coming in from the transport multiplex can be separated into channel streams by a number of methods, such as, for example, using stream identifiers to separate the incoming data, and then to map the streams to their appropriate logical channel, ordering the data based on completion time. In addition, a clock stream can be added to the transport de-multiplexer. As noted, an exemplary output of a transport demux according to exemplary embodiments of the present invention is shown on the bottom section of Fig. 3. Another way to combine the access units world be, for example, to place time stamps on the access units using the clock stream as a method of organizing the data or as an error checking method, or alternatively, for example, to use time stamps which are already embedded in the access units.

### Exemplary Source Code

The following exemplary software source code extracts can be used, in exemplary embodiments of the present invention, to implement an embodiment of the present invention that utilizes an H.264 compliant video player, in a multiplex that has three video channels. It is understood that in different contexts modified source code would be used to conform to various video formats, the number of channels, the constraints of various video chips and video player systems, etc., as may be appropriate, and thus the following code is only one of a multitude of examples of source code that can, for example, be used to implement exemplary embodiments of the present invention. Figs. 5-8 describe an exemplary embodiment created using the following exemplary code, and thus can be useful for analyzing it. It is understood that the following code is by way of illustration, and only provides certain illustrative functionalities. The following exemplary source code excerpts refer to an exemplary implementation of an embodiment of the present invention named "FAST_CHANNEL_CHANGE."

```
 ************************ BEGIN EXEMPLARY CODE *************************
 // Overall System
 / Create Fast Channel Change Objects
 fcc = getFastChannelChange();
 // Add Clock Stream Identifier
 INF_PRINTF("Adding clock SID to demux.\n");
 demux->addSID(demux, SDTP_CLOCK_SID, FIFO_UNSYNCHRONIZED, SDTP_MAX_PAYLOAD_SIZE);
 clockInput = demux->getSID(demux, SDTP_CLOCK_SID);
 // Add Stream identifiers For Each Channel In The Transport De-multiplexer
 INF_PRINTF("Adding SIDs to demux.\n");
 demux->addSID(demux, 280, FIFO_UNSYNCHRONIZED, SDTP_MAX_PAYLOAD_SIZE);
 demux->addSID(demux, 281, FIFO_UNSYNCHRONIZED, SDTP_MAX_PAYLOAD_SIZE);
 demux->addSID(demux, 290, FIFO_UNSYNCHRONIZED, SDTP_MAX_PAYLOAD_SIZE);
 demux->addSID(demux, 291, FIFO_UNSYNCHRONIZED, SDTP_MAX_PAYLOAD_SIZE);
 demux->addSID(demux, 310, FIFO_UNSYNCHRONIZED, SDTP_MAX_PAYLOAD_SIZE);
 demux->addSID(demux, 311, FIFO_UNSYNCHRONIZED, SDTP_MAX_PAYLOAD_SIZE);
 demux->addSID(demux, 256, FIFO_PES, SDTP_MAX_PAYLOAD_SIZE * 1024);
 demux->addSID(demux, 257, FIFO_PES, SDTP_MAX_PAYLOAD_SIZE * 1024);
 demux->addSID(demux, 258, FIFO_PES, SDTP_MAX_PAYLOAD_SIZE * 1024);
 // Map Stream Identifiers To Channel Stream
 demux->setSIDChannel(demux, 280, 256);
 demux->setSIDChannel(demux, 281, 256);
 demux->setSIDChannel(demux, 290, 257);
 demux->setSIDChannel(demux, 291, 257);
 demux->setSIDChannel(demux, 310, 258);
 demux->setSIDChannel(demux, 311, 258);
 channel1 = demux->getSID(demux, 256);
 channel2 = demux->getSID(demux, 257);
 channel3 = demux->getSID(demux, 258);
 // Set Initial Channel And Start Stream
 fcc->setchannel(fcc, channels[channelIndex]);
 fcc->start(fcc);
 // Display Video
 player->sendMediaCommand(player, PLAYER_OPEN, FALSE, 1000);
 player->sendMediaCommand(player, PLAYER_PLAY, FALSE, 500);
 // Change Channels And Display Video
 fcc->tuneTo(fcc, channels[channelIndex]);
 player->sendMediaCommand(player, PLAYER_OPEN, FALSE, 1000);
 player->sendMediaCommand(player, PLAYER_PLAY, FALSE, 500);
 lllllllllllllllllllllllllllllllllllllllllllllllllllllllllllllllllllllllllllllllllllllllllllll
 // @METHOD: FCCTuneTo
 //
 // @PARAMETERS:
 // iPUBLIC : the public interface of the FAST_CHANNEL_CHANGE
 // channel : the channel to tune to
 //
 // @RETURNS:
 // SUCCESS or FAILURE
 //
 // @DESCRIPTION:
 // This method will change the current channel to the given channel.
 //
 llllllllllllllllllllllllllllllllllllllllllllllllllllllllllllllllllllllll
 STATUS FCCTuneTo(pFAST_CHANNEL_CHANGE iPUBLIC, ULONG channel)
 {
 pFCC_CHANNEL_NODE node, nodeFound;
 ULONG numChannels;
 pFIFOBUFFER fifo;
 pFIFO_PROCESSOR processor;
 PROCESSOR_PARAMETERS params;
 ULONG i;
 ASSERT(iPUBLlC != NULL);
 ASSERT(channel != INVALID_CHANNEL);
 DBG_PRINTF("FCCTuneTo(): enter\n");
 RTM_ASSERT(LOCK_MUTEX(iPRIVATE->m_mutex) == SUCCESS);
 if(iPRIVATE->m_started == FALSE)
 {
 ERR_PRINTF("FCCTuneTo(): Can not tune to channel %lu while stopped.\n", channel);
 RTM_ASSERT(UNLOCK_MUTEX(iPRIVATE->m_mutex) == SUCCESS);
 return FAILURE;
 }
 if(iPRIVATE->m_currentChannel == INVALID_CHANNEL)
 {
 ERR_PRINTF("FCCTuneTo(): No channels on channel list.\n");
 RTM_ASSERT(UNLOCK_MUTEX(iPRIVATE->m_mutex) == SUCCESS);
 return FAILURE;
 }
 node = (pFCC_CHANNEL_NODE) FCCChannelCreateNode();
 ASSET(node != NULL);
 node->m_channel = channel;
 nodeFound = (pFCC_CHANNEL_NODE)
 iPRIVATE->m_channelList->find(iPRIVATE->m_channelList, (pLIST_NODE) node);
 ((pLIST_NODE) node)->deleteNode((pLIST_NODE) node);
 if(nodeFound == NULL)
 {
 ERR_PRINTF("FCCTuneTo(): Channel %lu not found on channel list.\n", node->m_channel);
 RTM_ASSERT(UNLOCK_MUTEX(iPRIVATE->m_mutex) == SUCCESS);
 return FAILURE;
 }
 if(channel == iPRIVATE->m_currentChannel)
 {
 DBG_PRINTF("FCCTuneTo(): Already tuned to channel %lu.\n", channel);
 RTM_ASSERT(UNLOCK_MUTEX(iPRIVATE->m_mutex) == SUCCESS);
 return SUCCESS;
 }
 numChannels = iPRIVATE->m_channelList->numNodes(iPRIVATE->m_channelList);
 for(i = 0; i < numChannels; ++i)
 {
 node = (pFCC_CHANNEL_NODE)
 iPRIVATE->m_channelList->getNodeByIndex(iPRIVATE->m_channelList, i);
 ASSERT(node != NULL);
 fifo = node->m_streamer->getFifo(node->m_streamer, 0);
 ASSERT(fifo != NULL);
 processor = fifo->getProcessor(fifo);
 ASSERT(processor != NULL);
 if(node->m_channel == nodeFound->m_channel)
 {
 params.m_numParameters = 1;
 params.m_parameters[0].m_type = FCC_PARAM_TYPE_MODE;
 params.m_parameters[0].m_value = FCC_NORMAL_MODE;
 RTM_ASSERT(processor->setParameters(processor, &pararms) == SUCCESS);
 RTM_ASSERT(iBASEPUBLIC->setInputInterface(iBASEPUBLIC, ilO(node->m_streamer)) == SUCCESS
 );
 }
 }
 for(i = 0; i < numChannels; ++i)
 {
 node = (pFCC_CHANNEL_NODE)
 iPRIVATE->m_channelList->getNodeBylndex(iPRIVATE->m_channelList, i);
 ASSERT(node != NULL);
 fifo = node->m_streamer->getFifo(node->m_streamer, 0);
 ASSERT(fifo != NULL);
 processor = fifo->getProcessor(fifo);
 ASSERT(processor != NULL);
 if(node->m_channel == iPRIVATE->m_currentChannel)
 {
 params.m_numParameters = 1;
 params.m_parameters[0].m_type = FCC_PARAM_TYPE_MODE;
 params.m_parameters[0].m_value = FCC_PARKING_MODE;
 RTM_ASSERT(processor->setParameters(processor, &params) == SUCCESS);
 }
 }
 iPRIVATE->m_currentChannel = channel;
 RTM_ASSERT(UNLOCK_MUTEX(iPRIVATE->m_mutex ) == SUCCESS);
 INF_PRINTF("FCCTuneTo(): changed channel to %lu.\n", iPRIVATE->m_currentChannel);
 return SUCCESS;
 }
 // Writing to FIFO in normal mode, discard data from buffer in parking mode
 STATUS FCCH264ProcessorWriteToFifo(pFIFO_PROCESSOR iPUBLIC, pUCHAR data, pULONG bytes, BOOL
 block)
 {
 STATUS status = SUCCESS;
 ASSERT(iPUBLIC != NULL);
 ASSERT(data != NULL);
 ASSERT(bytes != 0);
 switch(iSUPERPRIVATE->m_syncState)
 {
 case PSS_HEADER_BYTES:
 RTM_ASSERT(*bytes <= MAX_PES_HEADER_SIZE);
 if((iSUPERPRIVATE->m_auLength + SPES_SIZE) > iPRIVATE->m_packetBufferSize)
 {
  if(iPRIVATE->m_packetBuffer != NULL)
 {
   free(iPRIVATE->m_packetBuffer);
 }
  iPRIVATE->m_packetBuffer = malloc((size_t)(iSUPERPRIVATE->m_auLength + SPES_SIZE));
 ASSERT(iPRIVATE->m_packetBuffer != NULL);
  iPRIVATE->m_packetBufferSize = iSUPERPRIVATE->m_auLength + SPES_SIZE;
  }
  memcpy(iPRIVATE->m_packetBuffer, data, (size_t) *bytes);
  iPRIVATE->m_currentPosition = *bytes;
  iPRIVATE->m_pesHeaderSize = *bytes;
  ASSERT(iPRIVATE->m_pesHeaderSize < MAX_PES_HEADER_SIZE);
  break;
  case PSS_PAYLOAD_BYTES:
  {
  BOOL iPicturePresent = FALSE;
  ULONG writeSize;
  pU8 writePointer = NULL;
  pLIST_NODE node, node2;
  ULONG numItems;
  pU8 wPtr1 wPtrN;
  ULONG bytesAvailable, bA, bA2;
  INT i, j;
  DBG_PRINTF("Copying %lu bytes to access unit at position %lu within ""(%lu byte) access
unit.\n",
   *bytes, iPRIVATE->m_currentPosition, iSUPERPRIVATE->m_auLength);
   RTM_ASSERT((*bytes + iPRIVATE->m_currentPosition) <=
   (iSUPERPRIVATE->m_auLength + PES_HEADER_SIZE));
   memcpy(&iPRIVATE->m_packetBuffer[iPRIVATE->m_currentPosition], data, (size_t) *bytes);
   iPRIVATE->m_currentPosition += *bytes;
   if(iSUPERPRIVATE->m_neededBytes == 0)
   {
 pU8 pesPacketBuffer = &iPRIVATE->m_packetBuffer[iPRIVATE->m_pesHeaderSize];
 ULONG pesPacketLength = iSUPERPRIVATE->m_auLength - iPRIVATE->m_pesHeaderSize;
 BYTE streamId = iPRIVATE->m_packetBuffer[3];
 DBG_PRINTF("Have a complete access unit (%lu), (%lu), (%02lx) "
     "(channel = %lu).\n", iPRIVATE->m_currentPosition,
       iSUPERPRIVATE->m_auLength, (ULONG) streamId, iPRIVATE->m_channel);
 RTM_ASSERT(iPRIVATE->m_currentPosition ==
       (iSUPERPRIVATE->m_auLength + SPES_SIZE));
 if(streamId == (U8) VIDEO_STREAM_ID)
 {
 //Check for I-Frame
   if(iPRIVATE->m_synchronized == FALSE)
   {
     DBG_PRINTF("Checking an access unit to see if it is " "an I picture.\n");
    }
   if(iPRIVATE->m_accessUnit->setData(iPRIVATE->m_accessUnit, pesPacketBuffer,
                     pesPacketLength) != SUCCESS)
   {
    ERR_PRINTF("Could not set data for access unit.\n");
    break;
   }
   if(iPRIVATE->m_accessUnit->isIPicture(iPRIVATE->m_accessUnit) == TRUE)
   {
     DBG_PRINTF("Found an I-picture (%Id) (%Ix).\n", (INT) iPRIVATE->m_channel, (ULONG)
     streamId);
     if(iPRIVATE->m_synchronized == FALSE)
     {
       INF_PRINTF("Channel %lu synchronized.\n", iPRIVATE->m_channel);
     }
     iPRIVATE->m_synchronized = TRUE;
     iSUPERPRIVATE->m_vbvSize = iPRIVATE->m_accessUnit->bufferSize(iPRIVATE->m_accessUnit);
     iPicturePresent = TRUE;
     writePointer = iSUPERPRIVATE->m_fifo->getWritePointer(iSUPERPRIVATE->m_fifo);
     ASSERT(writePointer != NULL);
   }
 }
 if(iPRIVATE->m_synchronized == TRUE)
 {
   writeSize = iSUPERPRIVATE->m_auLength + SPES_SIZE;
   DBG_PRINTF("Writing access unit to fifo.\n");
   status = iPRIVATE->PESProcessorWriteToFifo(iSUPERPUBLIC, iPRIVATE->m_packetBuffer,
                        &writeSize, block);
   ASSERT(writeSize == (iSUPERPRIVATE->m_auLength + SPES_SIZE));
   if(status != SUCCESS)
   {
     INF_PRINTF("Fifo would block on write.\n");
     break;
   }
   //Parking Mode
   if((streamId == (U8) VIDEO_STREAM_ID) &&
     (iPRIVATE->m_mode == FCC_H264_PARKING_MODE) &&
     (iPicturePresent == TRUE))
   {
     ULONG vbvLevel = iPRIVATE->m_accessUnit->bufferSize(iPRIVATE->m_accessUnit);
     ULONG fifoSize = iSUPERPRIVATE->m_fifo->getSize(iSUPERPRIVATE->m_fifo);
     if(vbvLevel == 0)
     {
       vbvLevel = fifoSize;
     }
     // For every H.264 access unit containing an I-frame, store the relevant data.
     node = iPRIVATE->m_iFrameList->insertAtTail(iPRiVATE->m_FrameList);
     ASSERT(node != NULL);
       ((pIFRAME_NODE) node)->m_writePointer = writePointer;
     ((pIFRAME_NODE) node)->m_vbvLevel = vbvLevel;
     ((pIFRAME_NODE) node)->m_otherBytes = iPRIVATE->m_otherBytes;
     iPRIVATE->m_otherBytes = 0;
     numItems = iPRIVATE->m_iFrameList->numNodes(iPRIVATE->m_iFrameList);
     bytesAvailable = iSUPERPRIVATE->m_fifo->getBytesAvailable(iSUPERPRIVATE->m_fifo);
     // Determine which I-frame meets the current VBV level criteria if all preceeding
H.264 frames in the FIFO were
     discarded.
     // Work backwards from the most recent I-frame.
     if(numltems > 1)
     {
       node = iPRIVATE->m_iFrameList->getNodeByIndex(iPRIVATE->m_iFrameList, 0);
       wPtr1 = ((pIFRAME_NODE) node)->m_writePointer;
       for(i = (INT) (numItems - 1); i > 0; -i)
       {
         node = iPRIVATE->m_iFrameList->getNodeByIndex(iPRIVATE->m_iFrameList, (ULONG)i);
         wPtrN = ((pIFRAME_NODE) node)->m_writePointer;
         ASSERT(wPtr1 != wPtrN);
         // bA is the number of bytes in the FIFO that would be left if all data
 before the I-frame being tested for parking was
         discarded.
         if(wPtrN > wPtr1)
         {
           bA = bytesAvailable - (ULONG) (wPtrN - wPtr1);
         }
         else
         {
           bA = bytesAvailable - (ULONG) (wPtrN + fifoSize - wPtr1);
         }
         // Account for audio and any other bytes (closed captioning). bA2 is the number
 of video bytes after and
         // including the I-frame being tested for parking.
         bA2 = bA;
         for(j = i; j < (INT) (numItems - 1); ++j)
         {
           node2 = iPRIVATE->m_iFrameList->getNodeByIndex(iPRIVATE->m-iFrameList, (ULONG)(
           j + 1 ));
           ASSERT(node2 != NULL);
           bA2 -= ((pIFRAME_NODE) node2)->m_otherBytes;
         }
        // Account for audio and any other bytes (closed captioning).
         bA2 = bA;
         for(j = i; j < (INT) (numItems - 1); ++j)
         {
           node2 = iPRIVATE->m_iFrameList->getNodeByIndex(iPRIVATE->m_iFrameList, (ULONG)(
           j + 1 ));
           ASSERT(node2 != NULL);
           bA2 -= ((pIFRAME_NODE) node2)->m_otherBytes;
         }
         if(bA2 >= ((pIFRAME_NODE) node)->m_vbvLevel)
         {
           DBG_PRINTF("Channel %lu setting parked I-frame (%lu -> %lu) (%lu).\n",
                iPRIVATE->m_channel, numItems, numItems - i, bA2);
           iSUPERPRIVATE->m_fifo->setReadPointer(iSUPERPRIVATE->m_fifo, wPtrN, bA);
           // Destroy some nodes
           for(j=i-1;j >=0;-j)
           {
             node = iPRIVATE->m_iFrameList->getNodeByIndex(iPRIVATE->m_iFrameList, (ULONG)
             j);
             ASSERT(node != NULL);
             iPRIVATE->m_iFrameList->destroyNode(iPRIVATE->m_iFrameList, node);
           }
           break;
         }
       }
     }
   }
   if(streamld != (U8) VIDEO_STREAM_ID) // other bytes includes CC data
   {
     iPRIVATE->m_otherBytes += writeSize;
   }
 }
 }
 break;
 }
 default:
 ERR_PRINTF("H264 parser in undetermined state.\n");
 ASSERT(iSUPERPRIVATE->m_syncState < PSS_NUM_SYNC_STATES);
 break;
 }
 return status;
 }
 // Write bytes into the FIFO - FCCParse
 while((status == SUCCESS) && ((iPRIVATE->m_readBytes > iPRIVATE->m_bufferIndex) ∥
 (iPRIVATE->m_neededBytes == 0) ∥ (iPRIVATE->m_moreToParse == TRUE)))
 {
 switch(iPRIVATE->m_syncState)
 {
 case FCC_FOUR_BYTES:
 copyBytes = (iPRIVATE->m_readBytes - iPRIVATE->m_bufferIndex) >= iPRIVATE->m_neededBytes
      ? iPRIVATE->m_neededBytes : iPRIVATE->m_readBytes - iPRIVATE->m_bufferIndex;
 memcpy(&iPRIVATE->m_packetBuffer[iPRIVATE->m_currentPosition],
       &iPRIVATE->m_readBuffer[iPRIVATE->m_bufferIndex], (size_t) copyBytes);
 iPRIVATE->m_currentPosition += copyBytes;
 iPRIVATE->m_bufferIndex += copyBytes;
 iPRIVATE->m_neededBytes -= copyBytes;
 if(iPRIVATE->m_neededBytes == 0)
 {
   auLength =(ULONG) iPRIVATE->m_packetBuffer[0]<<16.
   auLength += (ULONG) iPRIVATE->m_packetBuffer[1]<<8;
   auLength += (ULONG) iPRIVATE->m_packetBuffer[2];
   iPRIVATE->m_neededBytes = auLength - 1;
   iPRIVATE->m_syncState = FCC_OTHER_BYTES;
   iPRIVATE->m_streamId = iPRIVATE->m_packetBuffer[3];
   DBG_PRINTF("FCCParse(): AU length = %lu, stream ID = %02Ix\n", auLength,(ULONG) iPRIVATE-
   >m_streamId);
 }
 break;
 case FCC_OTHER_BYTES:
 {
 pFIFOBUFFER fifo;
 BOOL block;
 ULONG writeSize;
 copyBytes = (iPRIVATE->m_readBytes - iPRIVATE->m_bufferIndex) >= iPRIVATE->m_neededBytes
      ? iPRIVATE->m_neededBytes : (iPRIVATE->m_readBytes - iPRIVATE->m_bufferIndex);
 copyBytes = (PACKET_BUFFER_SIZE - iPRIVATE->m_currentPosition) >= copyBytes
      ? copyBytes : (PACKET_BUFFER_SIZE - iPRIVATE->m_currentPosition);
 memcpy(&iPRIVATE->m_packetBuffer[iPRIVATE->m_currentPosition],
     &iPRIVATE->m_readBuffer[iPRIVATE->m_bufferIndex], (size_t) copyBytes);
 iPRIVATE->m_currentPosition += copyBytes;
 iPRIVATE->m_bufferIndex += copyBytes;
 iPRIVATE->m_neededBytes -= copyBytes;
 if((iPRIVATE->m_currentPosition == PACKET_BUFFER_SIZE) ∥
   (iPRIVATE->m_neededBytes == 0))
 {
   if(iPRIVATE->m_streamId == (U8) VIDEO_STREAM_ID)
   {
     fifo = iBASEPUBLIC->getFio(iBASEPUBLIC, 0);
   }
   else if(iPRIVATE->m_streamId == (U8) AUDIO_STREAM_ID)
   {
     fifo = iBASEPUBLlC->getFifo(iBASEPUBLlC, 1);
   }
   else if(iPRIVATE->m_streamId == (U8) CC_STREAM_ID)
   {
     fifo = iBASEPUBLIC->getFifo(iBASEPUBLIC, 2);
   }
   DBG_PRINTF("FCCParse(): Writing %lu bytes to fifo.\n", iPRIVATE->m_currentPosition);
   writeSize = iPRIVATE->m_currentPosition;
   block = (input->type(input) == INTERFACE_CLIENT_DRIVEN) ? TRUE : FALSE;
   status = fifo->write(fifo, iPRIVATE->m_packetBuffer, &writeSize, block);
   }
 }
 llllllllllllllllllllllllllllllllllllllllllllllllllllllllllllllllllllllllllllllllllllllllllllll
 // @METHOD: FCCNumChannels
 //
 //
 // @PARAMETERS:
 // iPUBLIC : the public interface of the FAST_CHANNEL_CHANGE
 //
 // @RETURNS:
 // The number of channels on the channel list.
 //
 // @DESCRIPTION:
 // This method gets the number of channels on the channel list.
 lllllllllllllllllllllllllllllllllllllllllllllllllllllllllllllllllllllllllllllll
 ULONG FCCNumChannels(pFAST_CHANNEL_CHANGE iPUBLIC)
 {
 ULONG numChannels;
 ASSERT(iPUBLIC != NULL);
 RTM_ASSERT(LOCK_MUTEX(iPRIVATE->m_mutex) == SUCCESS);
 numChannels = iPRIVATE->m_channelList->numNodes(iPRIVATE->m_channelList);
 RTM_ASSERT(UNLOCK_MUTEX(iPRIVATE->m_mutex) == SUCCESS);
 return numChannels;
 }
 //////////////////////////////////////////////////////////////////////////////////////////////
 // @METHOD: FCCSetChannel
 //
 // @PARAMETERS:
 // iPUBLIC : the public interface of the FAST_CHANNEL_CHANGE
 //
 // @RETURNS:
 // SUCCESS or FAILURE
 //
 // @DESCRIPTION:
 // This method sets the current channel.
 //
 //////////////////////////////////////////////////////////////////////////////////////////////
 STATUS FCCSetChannel(pFAST_CHANNEL_CHANGE iPUBLIC, ULONG channel)
 {
 ASSERT(iPUBLIC != NULL);
 ASSERT(channel != INVALID_CHANNEL );
 RTM_ASSERT(LOCK_MUTEX(iPRIVATE->m_mutex) == SUCCESS);
 if(iPRIVATE->m_started == TRUE)
 {
 ERR_PRINTF("FCCSetChannel(): Can not set current channel while started.\n");
 RTM_ASSERT(UNLOCK_MUTEX(iPRIVATE->m_mutex) == SUCCESS);
 return FAILURE;
 }
 iPRIVATE->m_currentChannel = channel;
 RTM_ASSERT(UNLOCK_MUTEX(iPRIVATE->m_mutex) == SUCCESS);
 INF_PRINTF("FCCSetChannel(): channel set to %lu.\n", iPRIVATE->m_currentChannel);
 return SUCCESS;
 }
 //////////////////////////////////////////////////////////////////////////////////////////////
 // @METHOD: FCCCurrentChannel
 //
 // @PARAMETERS:
 // iPUBLIC : the public interface of the FAST_CHANNEL_CHANGE
 //
 // @RETURNS:
 // The current channel.
 //
 // @DESCRIPTION:
 // This method gets the current channel.
 //////////////////////////////////////////////////////////////////////////////////////////////
 ULONG FCCCurrentChannel(pFAST_CHANNEL_CHANGE iPUBLIC)
 {
 ULONG channel;
 ASSERT(iPUBLIC != NULL);
 RTM_ASSERT(LOCK_MUTEX(iPRIVATE->m_mutex) == SUCCESS);
 channel = iPRIVATE->m_currentChannel;
 RTM_ASSERT(UNLOCK_MUTEX(iPRIVATE->m_mutex) == SUCCESS);
 return channel;
 }
 //////////////////////////////////////////////////////////////////////////////////////////////
 // @METHOD: FCCWriteToFifo
 //
 // @PARAMETERS:
 // iPUBLIC : public interface to the input daemon for the demux streamer
 // buffer : buffer of data that daemon has read
 // size : size of the buffer
 // block : ignored
 //
 // @RETURNS:
 // SUCCESS
 //
 // @DESCRIPTION:
 // This method will write PES packets into the appropriate fifo.
 //
 //////////////////////////////////////////////////////////////////////////////////////////////
 STATUS FCCWriteToFifo( pDAEMON iPUBLIC, pU8 buffer, pULONG size, BOOL block)
 {
 pFAST_CHANNEL_CHANGE_PRIVATE fcc;
 ULONG bytesToWrite = *size;
 ULONG readBytes;
 ASSERT(iPUBLIC != NULL);
 ASSERT(buffer != NULL);
 ASSERT(size != NULL);
 DBG_PRINTF("FCCWriteToFifo(): Writing %lu bytes to demux.\n", *size);
 fcc = (pFAST_CHANNEL_CHANGE_PRIVATE) iPROCESSING_DAEMON(iPUBLIC)->m_streamer;
 fcc->m_readBuffer = iPROCESSING_DAEMON(iPUBLIC)->m_buffer;
 readBytes = iPROCESSING_DAEMON(iPUBLIC)->m_bytes;
 ASSERT(fcc != NULL);
 ASSERT(fcc->m_readBuffer != NULL);
 ASSERT(readBytes > 0);
 while(bytesToWrite > 0)
 {
 if((fcc->m_needMoreBytes) && (!fcc->m_moreToParse))
 {
 fcc->m_readBytes = (readBytes > bytesToWrite) ? bytesToWrite : readBytes;
 fcc->m_bufferIndex = 0;
 DBG_PRINTF("Copying %lu bytes into read buffer.\n", fcc->m_readBytes);
 memcpy(fcc->m_readBuffer, buffer, (size_t) fcc->m_readBytes);
 buffer += fcc->m_readBytes;
 bytesToWrite -= fcc->m_readBytes;
 fcc->m_needMoreBytes = FALSE;
 }
 DBG_PRINTF("Bytes left to write = %lu.\n", bytesToWrite);
 if(FCCParse((pFAST_CHANNEL_CHANGE) fcc) != SUCCESS)
 {
 // Parse failed so shutdown the fast channel change object.
 ERR_PRINTF("Failed to parse access unit...dumping.\n");
 return FAILURE;
 }
 }
 DBG_PRINTF("FCCWriteToFifo(): Wrote %lu bytes to demux.\n", *size );
 return SUCCESS;
 }
 //////////////////////////////////////////////////////////////////////////////////////////////
 // @METHOD: FCCParse
 //
 // @PARAMETERS:
 // iPUBLIC : the public interface for the FAST_CHANNEL_CHANGE interface
 //
 // @DESCRIPTION:
 // This method provides the write functionality for the FAST_CHANNEL_CHANGE // interface.
 //
 //////////////////////////////////////////////////////////////////////////////////////////////
 STATUS FCCParse(pFAST_CHANNEL_CHANGE iPUBLIC)
 {
 STATUS status = SUCCESS;
 pDEV_IOINTERFACE input;
 ULONG. copyBytes, auLength;
 ASSERT(iPUBLIC != NULL);
 input = iBASEPUBLIC->getInputInterface(iBASEPUBLIC, 0);
 ASSERT(input != NULL);
 if(iPRIVATE->m_readBytes == 0)
 {
 return SUCCESS;
 }
 while((status == SUCCESS) &&
 ((iPRIVATE->m_readBytes > iPRIVATE->m_bufferIndex))∥
  (iPRIVATE->m_neededBytes == 0)∥
  (iPRIVATE->m_moreToParse == TRUE)))
 {
  switch(iPRIVATE->m_syncState)
  {
 case FCC_FOUR_BYTES:
  copyBytes = (iPRIVATE->m_readBytes - iPRIVATE->m_bufferIndex) >= iPRIVATE->m_neededBytes
      ? iPRIVATE->m_neededBytes : iPRIVATE->m_readBytes - iPRIVATE->m_bufferIndex;
 memcpy(&iPRIVATE->m_packetBuffer[iPRIVATE->m_currentPosition],
     &iPRIVATE->m_readBuffer[iPRIVATE->m_bufferIndex],
     (size_t) copyBytes);
 iPRIVATE->m_currentPosition += copyBytes;
 iPRIVATE->m_bufferIndex += copyBytes;
 iPRIVATE->m_neededBytes -= copyBytes;
 if(iPRIVATE->m_neededBytes == 0)
 {
   auLength = (ULONG) iPRIVATE->m_packetBuffer[0] << 16;
   auLength += (ULONG) iPRIVATE->m_packetBuffer[1] << 8;
   auLength += (ULONG) iPRIVATE->m_packetBuffer[2];
   iPRIVATE->m_neededBytes = auLength - 1;
   iPRIVATE->m_SyncState = FCC_OTHER_BYTES;
   iPRIVATE->m_streamId = iPRIVATE->m_packetBuffer[3];
   DBG_PRINTF("FCCParse(): AU length = %lu, stream ID = %02lx\n", auLength,
       (ULONG) iPRIVATE->m_streamId);
 }
 break;
 case FCC_OTHER_BYTES:
 {
 pFIFOBUFFER fifo;
 BOOL block;
 ULONG writeSize;
 copyBytes = (iPRIVATE->m_readBytes - iPRIVATE->m_bufferIndex) >= iPRIVATE->m_neededBytes
      ? iPRIVATE->m_neededBytes : (iPRIVATE->m_readBytes - iPRIVATE->m_bufferIndex);
 copyBytes = (PACKET_BUFFER_SIZE - iPRIVATE->m_currentPosition) >= copyBytes
      ? copyBytes : (PACKET_BUFFER_SIZE - iPRIVATE->m_currentPosition);
 memcpy(&iPRIVATE->m_packetBuffer[iPRIVATE->m_currentPosition],
     &iPRIVATE->m_readBuffer[iPRIVATE->m_bufferIndex],
     (size_t) copyBytes);
 iPRIVATE->m_currentPosition += copyBytes;
 iPRIVATE->m_bufferIndex += copyBytes;
 iPRIVATE->m_neededBytes -= copyBytes;
 if((iPRIVATE->m_currentPosition == PACKET_BUFFER_SIZE)∥
   (iPRIVATE->m_neededBytes == 0))
 {
   if(iPRIVATE->m_streamId == (U8) VIDEO_STREAM_ID)
   {
     fifo = iBASEPUBLIC->getFifo(iBASEPUBLIC, 0);
   }
   else if(iPRIVATE->m_streamId == (U8) AUDIO_STREAM_ID
   {
     fifo = iBASEPUBLIC->getFifo(iBASEPUBLIC, 1);
   }
   else if(iPRIVATE->m_streamld == (U8) CC_STREAM_ID)
   {
     fifo = iBASEPUBLIC->getFifo(iBASEPUBLIC, 2);
   }
   else
   {
     ERR_PRINTF("FCCParse(): Unknown PES stream ID (%lu) encountered...dumping.\n",
         (ULONG) iPRIVATE->m_streamId);
     iPRIVATE->m_moreToParse = FALSE;
     iPRIVATE->m_currentPosition = 0;
     goto next_state;
   }
   ASSERT(fifo != NULL);
   DBG_PRINTF("FCCParse(): Writing %lu bytes to fifo.\n", iPRIVATE->m_currentPosition);
   writeSize = iPRIVATE->m_currentPosition;
   block = (input->type(input) == INTERFACE_CLIENT_DRIVEN) ? TRUE : FALSE;
   status = fifo->write(fifo, iPRIVATE->m_packetBuffer, &writeSize, block);
   if(status == SUCCESS)
   { DBG_PRINTF("FCCParse(): Wrote %lu bytes to fifo, stream id %02lx.\n",
     DBG_PRINTF("FCCParse(): Wrote %lu bytes to fifo, stream id %02lx.\n",
           writeSize, (ULONG) iPRIVATE->m_streamId);
   }
   else if(block != TRUE)
   {
     ERR_PRINTF("FCCParse(): Failed to write %lu bytes to fifo, stream id %02lx\n",
           writeSize, (ULONG) iPRIVATE->m_streamId);
   }
   if((block == TRUE) && (status != SUCCESS))
   {
     iPRIVATE->m_moreToParse = TRUE;
   }
   else
   {
     iPRIVATE->m_moreToParse = FALSE;
   }
    if(status == SUCCESS)
   {
     iPRIVATE->m_currentPosition = 0;
   }
  }
  next_state:
  if(iPRIVATE->neededBytes==0)
  {
    iPRIVATE->m_neededBytes = 4;
    iPRIVATE->m_syncState = FCC_FOUR_BYTES;
  }
  break;
  }
  default:
  {
  ERR_PRINTF("FCCParse(): FCC in undetermined state.\n");
  ASSERT(iPRIVATE->m_syncState < FCC_NUM_SYNC_STATES);
  break;
  }
  }
  }
  ASSERT(iPRIVATE->m_bufferIndex <= iPRIVATE->m_readBytes); // sanity check
  if(iPRIVATE->m_bufferIndex == iPRIVATE->m_readBytes)
  {
  iPRIVATE->m_needMoreBytes = TRUE;
  }
  return status;
  }
  //////////////////////////////////////////////////////////////////////////////////////////////
  // @METHOD: FCCGetEnumeratedMember
  //
  // @PARAMETERS:
  // iPUBLIC : FCC interface passed in as a pBUFFERED_STREAMER
  // member : identifies enumerated member to query
  // value : quaried falue is passed back here
  // number : indicates the number of the component that is to be queried
  //
  // @RETURNS:
  // SUCCESS or FAILURE
  //
  // @DESCRIPTION:
  // This method will get input streamer FIFO levels, demux FIFO levels, and
  // output interface
  // FIFO levels for the fastChannelChange component. If the member to be queried is not
  // recognized by this method, them the default handler is called (inherited from demux
  // streamer).
  //
  //////////////////////////////////////////////////////////////////////////////////////////////
  INT FCCGetEnumeratedMember(pBUFFERED_STREAMER iPUBLlC, ULONG member, pLONG value,
       ULONG number)
       {
       STATUS status = SUCCESS;
       ULONG numChannels;
       ASSERT(iPUBLIC != NULL);
       ASSERT(value != NULL);
       switch(member)
       {
       case_FCC_STREAMER_INPUT_BUFFER_LEVEL:
       {
       pFCC_CHANNEL_NODE node;
       pBUFFERED_STREAMER streamer;
       if(number < iPRIVATE->m_channelList->numNodes(iPRIVATE->m_channelList))
       {
 node =(pFCC_CHANNEL_NODE)
   iPRIVATE->m_channelList->getNodeByIndex(iPRIVATE->m_channelList, number);
 ASSERT(node != NULL);
 streamer = node->m_streamer;
 ASSERT(streamer != NULL);
 *value = (LONG) streamer->bufferLevel(streamer);
 }
 else
 {
  ERR_PRINTF("FCC enumerated member query exceeds channel limit.\n");
 status = FAILURE;
 }
 }
 break;
 caseFCC_STREAMER_DEMUX_BUFFER_LEVEL:
 {
 pIO_FIFO_LIST_NODE fifoNode;
 pDEV_IOINTERFACE interface;
 if(number < iBASEPRIVATE->m_fifoList->numNodes(iBASEPRIVATE->m_fifoList))
 {
 fifoNode = (pIO_FIFO_LIST_NODE)
   iBASEPRIVATE->m_fifoList->getNodeByIndex(iBASEPRIVATE->m_fifoList, number);
 ASSERT(fifoNode != NULL);
  interface = (pDEV_IOINTERFACE) fifoNode->m_ioFifo;
 status = interface->getEnumeratedMember(interface, FIFO_BYTES_AVAILABLE, value);
 }
 else
 {
  ERR_PRINTF("FCC enumerated member query exceeds fifo limit.\n");
 status = FAILURE;
 }
 }
 break;
 caseFCC_STREAMER_OUTPUT_BUFFER_LEVEL:
 {
 pDEV_IOINTERFACE interface = (pDEV_IOINTERFACE) iPRIVATE->m_ioService;
 if(number < iPRIVATE->m_ioService->numInterfaces(iPRIVATE->m_ioService))
 {
 status = interface->getEnumeratedMember(interface, FIFO_BYTES_AVAILABLE, value);
 }
 else
 {
  ERR_PRINTF("FCC enumerated member query exceeds fifo limit.\n");
 status = FAILURE;
 }
 }
 break;
 default:
 status = iPRIVATE->defaultGetEnumeratedMember(iBASEPUBLIC, member, value, number);
 break;
 }
 return status;
 }
 ****************************** END EXEMPLARY CODE ******************************
```

## Claims

1. A method for fast channel change between logical channels within a transport multiplex, comprising:
receiving a channel selection signal identifying a first tuned channel;
simultaneously decoding channel data for each channel (1, 2, N) in a transport multiplex (205);
reconstructing all access units for each channel and sending them out to a streamer (220) on their respective channel stream in the order that each access unit completes;
outputting channel data from a streamer corresponding to the first tuned channel to a media player (250);
for each non-tuned channel, storing and maintaining a minimum amount of channel data in a buffer (220) by:
recording:
each key frame's (V') starting position in the buffer (220);
a minimum necessary amount of video data to store after each key frame (V') to prevent underflow in the event of a channel change to that channel; and
a quantity of non key frame data (V, A, CC) stored since the last key frame,
and discarding either:
(i) the data stored previous to the last stored key frame if said quantity is greater than or equal to said minimum necessary amount; or
(ii) the data stored previous to the second to last stored key frame if said quantity is less than said minimum necessary amount;
and **characterized in that**
upon receipt of a channel change signal identifying a new tuned channel;
first outputting channel data from a streamer corresponding to the new tuned channel to the media player (250) while continuing to output channel data from said first tuned channel to the media player (250); and
then stopping the output of data from the steamer corresponding to the first tuned channel to the media player (250).

2. The method of claim 1, wherein said minimum necessary amount of channel data is channel specific, and is a function of at least one of buffering information present in the video data, media player throughput and packet size for that channel.

3. The method of claim 1, wherein channel data for said tuned channel is written to that channel's streamer output, and channel data for all other channels is written to an internal memory in each of said non-tuned channel's streamers.

4. The method of claim 1, further comprising:
receiving a channel selection signal identifying a newly tuned channel; and
first outputting the stored data from the newly tuned channel's streamer to the media player, and then outputting newly received data from said newly tuned channel's streamer to the media player.

5. The method of clam 1, wherein channel data for each tuned channel is written to the streamer output starting at the first entry point the streamer encounters.

6. The method of clam 1, wherein channel data for each non-tuned channel is written to an internal streamer buffer starting at the first entry point the streamer encounters.

7. The method of claim 1, further comprising outputting channel data for the currently tuned channel to a de-multiplexer (230), so as to separate video, audio and informational frames, and outputting said de-multiplexed frames to said media player.

8. The method of claim 1, wherein said storing a minimum amount of channel data in a buffer in each streamer for each non-tuned channel includes continually maintaining video data for each such channel sufficient to prevent underflow on a channel change to that non-tuned channel.

9. The method of claim 1, wherein said recording and discarding includes:
starting at the last stored key frame in the buffer and working backwards to at most a second last stored key frame in the buffer,
and at each such key frame determining if the amount of video data stored after that key frame is sufficient to prevent underflow on a channel change, the data stored previous to that key frame is discarded.

10. The method of claim 9, wherein said amount of video data stored includes both key frames and non-key frames.

11. A computer program product comprising a computer usable medium having computer readable program code means embodied therein, the computer readable program code means in said computer program product comprising means for causing a computer to perform the steps of any of claims 1 to 10.

12. A system for fast channel change between various channels within a transport multiplex (205), comprising:
a transport de-multiplexer (210) receiving a transport multiplex (205) and
simultaneously outputting a data stream for each channel from a plurality of channels (Channel 1, Channel 2, ... Channel N) in the transport multiplex;
a set of streamers (220), being one for each channel in said plurality of channels, each said streamer (220) having a streamer buffer and being communicably connected to an output data stream from the transport de-multiplexer;
a media player (250) communicably connected to the output of each streamer;
and at least one data processor,
wherein the at least one data processor:
receives a channel selection signal identifying a first tuned channel,
causes channel data from a streamer (220) corresponding to the first tuned channel to be output to a media player (250); and
for all non-tuned channels, stores and maintains a minimum amount of channel data in a streamer buffer by recording, as to each such non-tuned channel:
each key frame's (V') starting position in the buffer (220);
a minimum necessary amount of video data to store after each key frame (V') to prevent underflow in the event of a channel change to that channel; and
a quantity of non key frame data stored since the last key frame,
and causes the discarding of either:
the data stored previous to the last stored key frame if said quantity is greater than or equal to said minimum necessary amount; or
the data stored previous to the second to last stored key frame if said quantity is
less than said minimum necessary amount;
and **characterized in that**
upon receipt of a channel change signal identifying a new tuned channel:
first outputs channel data from a streamer corresponding to the new tuned channel to the media player (250) while continuing to output channel data from said first tuned channel to the media player (250); and
then stopping the output of data from the streamer corresponding to the first tuned channel to the media player (250).

13. The system of claim 12, wherein each streamer also has a streamer data processor, and the data processor sends signals to said streamer data processors to cause said channel data from a streamer corresponding to the tuned channel to be output to a media player and to cause said minimum amount of channel data necessary to prevent underflow on a channel change to that channel to be stored in a buffer in each streamer for each of the non-tuned channels.

14. The system of claim 13, further comprising:
upon said data processor receiving a second channel selection signal identifying a new tuned channel;
said data processor playing video data from the buffer of said new tuned channel starting from:
the last stored key frame if the quantity of data comprising said last stored key frame and all subsequently stored data is greater than or equal to said minimum necessary amount; or
the second to last stored key frame if the quantity of data comprising said last stored key frame and all subsequently stored data is less than said minimum necessary amount.

15. The method of claim 1, further comprising:
upon receiving a second channel selection signal identifying a new tuned channel;
playing video data from the buffer of said new tuned channel starting from:
the last stored key frame if the quantity of data comprising said last stored key frame and all subsequently stored data is greater than or equal to said minimum necessary amount; or
the second to last stored key frame if the quantity of data comprising said last stored key frame and all subsequently stored data is less than said minimum necessary amount.

## Patentansprüche

1. Verfahren zum schnellen Kanalwechsel zwischen logischen Kanälen in einem Transportmultiplex, Folgendes umfassend:
Empfangen eines Kanalauswahlsignals, das einen ersten abgeglichenen Kanal ausweist;
Gleichzeitiges Decodieren von Kanaldaten für jeden Kanal (1, 2, N) in einem Transportmultiplex (205);
Rekonstruieren aller Zugriffseinheiten für jeden Kanal, und deren Aussenden an einen Streamer (220) in ihrem jeweiligen Kanalstrom in der Reihenfolge, in der jede Zugriffseinheit den Vorgang erledigt;
Ausgeben von dem ersten abgeglichenen Kanal entsprechenden Kanaldaten aus einem Streamer an eine Medienabspieleinheit (250);
Speichern und Aufrechterhalten eines Mindestbestands an Kanaldaten in einem Zwischenspeicher (220) für jeden nicht abgeglichenen Kanal durch:
Aufzeichnen:
der Startposition jedes Schlüsselbilds (V') im Zwischenspeicher (220);
eines nach jedem Schlüsselbild (V') zu speichernden notwendigen Mindestbestands an Videodaten, um im Falle eines Kanalwechsels zu diesem Kanal einen Unterlauf zu verhindern; und
einer Menge an Nichtschlüsselbilddaten (V, A, CC), die seit dem letzten Schlüsselbild gespeichert wurden,
und Verwerfen entweder:
(i) der vor dem letzten gespeicherten Schlüsselbild gespeicherten Daten, wenn die Menge größer als der oder gleich dem notwendigen Mindestbestand ist; oder
(ii) der vor dem vorletzten gespeicherten Schlüsselbild gespeicherten Daten, wenn die Menge kleiner ist als der notwendige Mindestbestand;
und **dadurch gekennzeichnet, dass**
beim Empfang eines Kanalwechselsignals, das einen neuen abgeglichenen Kanal ausweist:
zuerst dem neuen abgeglichenen Kanal entsprechende Kanaldaten aus einem Streamer an die Medienabspieleinheit (250) ausgegeben und dabei weiterhin Kanaldaten vom ersten abgeglichenen Kanal an die Medienabspieleinheit (250) ausgegeben werden; und
dann die Ausgabe von dem ersten abgeglichenen Kanal entsprechenden Daten vom Streamer an die Medienabspieleinheit (250) gestoppt wird.

2. Verfahren nach Anspruch 1, wobei der notwendige Mindestbestand an Kanaldaten kanalspezifisch ist und von einer in den Videodaten vorhandenen Zwischenspeicherungsinformation, einem Durchsatz der Medienabspieleinheit und/oder einer Paketgröße für diesen Kanal abhängt.

3. Verfahren nach Anspruch 1, wobei Kanaldaten für den abgeglichenen Kanal in den Ausgang dieses Kanalstreamers eingeschrieben werden, und Kanaldaten für alle anderen Kanäle in einen internen Speicher in jeden der Streamer des nicht abgeglichenen Kanals eingeschrieben werden.

4. Verfahren nach Anspruch 1, darüber hinaus umfassend:
Empfangen eines Kanalauswahlsignals, das einen neu abgeglichenen Kanal ausweist; und
zuerst Ausgeben der gespeicherten Daten aus dem Streamer des neu abgeglichenen Kanals an die Medienabspieleinheit, und dann Ausgeben neu empfangener Daten aus dem Streamer des neu abgeglichenen Kanals an die Medienabspieleinheit.

5. Verfahren nach Anspruch 1, wobei Kanaldaten für jeden abgeglichenen Kanal in den Streamerausgang ab dem ersten Eintrittspunkt, auf den der Streamer stößt, eingeschrieben werden.

6. Verfahren nach Anspruch 1, wobei Kanaldaten für jeden nicht abgeglichenen Kanal in einen internen Streamerzwischenspeicher ab dem ersten Eintrittspunkt, auf den der Streamer stößt, eingeschrieben werden.

7. Verfahren nach Anspruch 1, darüber hinaus umfassend, Kanaldaten für den momentan abgeglichenen Kanal an einen Demultiplexer (230) auszugeben, um Video-, Audio- und Informationsdatenübertragungsblöcke zu trennen, und die demultiplexierten Datenübertragungsblöcke an die Medienabspieleinheit auszugeben.

8. Verfahren nach Anspruch 1, wobei das Speichern eines Mindestbestands an Kanaldaten in einem Zwischenspeicher in jedem Streamer für jeden nicht abgeglichenen Kanal umfasst, ständig Videodaten für jeden solchen Kanal aufrechtzuerhalten, die ausreichen, um einen Unterlauf bei einem Kanalwechsel zu diesem nicht abgeglichenen Kanal zu verhindern.

9. Verfahren nach Anspruch 1, wobei das Aufzeichnen und Verwerfen umfasst:
Beginnen beim letzten gespeicherten Schlüsselbild im Zwischenspeicher und Zurückarbeiten zu höchstens einem zweitletzten gespeicherten Schlüsselbild im Zwischenspeicher,
und Bestimmen bei jedem solchen Schlüsselbild, ob der Bestand an Videodaten, die nach diesem Schlüsselbild gespeichert sind, ausreicht, um einen Unterlauf bei einem Kanalwechsel zu verhindern, wobei die vor diesem Schlüsselbild gespeicherten Daten verworfen werden.

10. Verfahren nach Anspruch 9, wobei der Bestand an gespeicherten Videodaten sowohl Schlüsselbilder als auch Nichtschlüsselbilder umfasst.

11. Computerprogrammprodukt, das einen computernutzbaren Datenträger mit einer computerlesbaren Programmcodeeinrichtung umfasst, die darin integriert ist, wobei die computerlesbare Programmcodeeinrichtung in dem Computerprogrammprodukt Mittel umfasst, um einen Computer dazu zu veranlassen, die Schritte nach einem der Ansprüche 1 bis 10 durchzuführen.

12. System zum schnellen Kanalwechsel zwischen verschiedenen Kanälen in einem Transportmultiplex (205), Folgendes umfassend:
einen Transportdemultiplexer (210), der ein Transportmultiplex (205) empfängt und gleichzeitig einen Datenstrom für jeden Kanal aus mehreren Kanälen (Kanal 1, Kanal 2, ... Kanal N) im Transportmultiplex ausgibt;
eine Gruppe Streamer (220), wobei es sich um einen Streamer für jeden Kanal der mehreren Kanäle handelt, wobei jeder Streamer (220) über einen Streamerzwischenspeicher verfügt und datenaustauschfähig an einen Ausgangsdatenstrom aus dem Transportdemultiplexer angeschlossen ist;
eine Medienabspieleinheit (250), die datenaustauschfähig an den Ausgang jedes Streamers angeschlossen ist;
und mindestens einen Datenprozessor,
wobei der mindestens eine Datenprozessor:
ein Kanalauswahlsignal empfängt, das einen ersten abgeglichenen Kanal ausweist,
bewirkt, dass dem ersten abgeglichenen Kanal entsprechende Kanaldaten aus einem Streamer (220) an eine Medienabspieleinheit (250) ausgegeben werden; und
für alle nicht abgeglichenen Kanäle einen Mindestbestand an Kanaldaten in einem Streamerzwischenspeicher speichert und aufrechterhält, indem jeden solchen nicht abgeglichenen Kanal betreffend aufgezeichnet wird:
die Startposition jedes Schlüsselbilds (V') im Zwischenspeicher (220);
ein nach jedem Schlüsselbild (V') zu speichernder notwendiger Mindestbestand an Videodaten, um im Falle einen Kanalwechsels zu diesem Kanal einen Unterlauf zu verhindern; und
einer Menge an Nichtschlüsselbilddaten, die seit dem letzten Schlüsselbild gespeichert wurden,
und das Verwerfen bewirkt von entweder:
der vor dem letzten gespeicherten Schlüsselbild gespeicherten Daten, wenn die Menge größer als oder gleich dem notwendigen Mindestbestand ist; oder
der vor dem vorletzten gespeicherten Schlüsselbild gespeicherten Daten, wenn die Menge kleiner ist als der notwendige Mindestbestand;
und **dadurch gekennzeichnet, dass**
beim Empfang eines Kanalwechselsignals, das einen neuen abgeglichenen Kanal ausweist:
zuerst dem neuen abgeglichenen Kanal entsprechende Kanaldaten aus einem Streamer an die Medienabspieleinheit (250) ausgibt und dabei weiterhin Kanaldaten vom ersten abgeglichenen Kanal an die Medienabspieleinheit (250) ausgibt; und
dann die Ausgabe von dem ersten abgeglichenen Kanal entsprechenden Daten vom Streamer an die Medienabspieleinheit (250) stoppt.

13. System nach Anspruch 12, wobei jeder Streamer auch über einen Streamerdatenprozessor verfügt und der Datenprozessor Signale an die Streamerdatenprozessoren überträgt, um zu bewirken, dass dem abgeglichenen Kanal entsprechende Kanaldaten von einem Streamer an eine Medienabspieleinheit ausgegeben werden, und zu bewirken, dass der Mindestbestand an Kanaldaten, der notwendig ist, um einen Unterlauf bei einem Kanalwechsel zu diesem Kanal zu verhindern, in einem Zwischenspeicher in jedem Streamer für jeden der nicht abgeglichenen Kanäle gespeichert wird.

14. System nach Anspruch 13, darüber hinaus umfassend:
wenn der Datenprozessor ein zweites Kanalauswahlsignal empfängt, das einen neuen abgeglichenen Kanal ausweist:
der Datenprozessor Videodaten aus dem Zwischenspeicher des neuen abgeglichenen Kanals abspielt ab:
dem letzten gespeicherten Schlüsselbild, wenn die Menge an Daten, die das letzte gespeicherte Schlüsselbild, und alle anschließend gespeicherten Daten umfasst, größer als der oder gleich dem notwendigen Mindestbestand ist; oder
dem vorletzten gespeicherten Schlüsselbild, wenn die Menge an Daten, die das letzte gespeicherte Schlüsselbild, und alle anschließend gespeicherten Daten umfasst, kleiner als der notwendige Mindestbestand ist.

15. Verfahren nach Anspruch 1, darüber hinaus umfassend:
beim Empfang eines zweiten Kanalauswahlsignals, das einen neuen abgeglichenen Kanal ausweist:
Abspielen von Videodaten aus dem Zwischenspeicher des neuen abgeglichenen Kanals ab:
dem letzten gespeicherten Schlüsselbild, wenn die Menge an Daten, die das letzte gespeicherte Schlüsselbild, und alle anschließend gespeicherten Daten umfasst, größer als der oder gleich dem notwendigen Mindestbestand ist; oder
dem vorletzten gespeicherten Schlüsselbild, wenn die Menge an Daten, die das letzte gespeicherte Schlüsselbild, und alle anschließend gespeicherten Daten umfasst, kleiner als der notwendige Mindestbestand ist.

## Revendications

1. Procédé de changement de canal rapide entre des canaux logiques à l'intérieur d'un multiplex de transport, comprenant :
la réception d'un signal de sélection de canal identifiant un premier canal accordé ;
le décodage de manière simultanée des données de canal pour chaque canal (1, 2, N) dans un multiplex de transport (205) ;
la reconstruction de toutes les unités d'accès pour chaque canal et leur envoi à un dispositif de transmission en continu (220) sur leur flux de canal respectif dans l'ordre où chaque unité d'accès s'exécute ; la délivrance en sortie des données de canal en provenance d'un dispositif de transmission en continu correspondant au premier canal accordé à un lecteur multimédia (250) ;
pour chaque canal non accordé, le stockage et le maintien d'une quantité minimum de données de canal dans une mémoire tampon (220) :
en enregistrant :
chaque position de départ de trame clé (V') dans la mémoire tampon (220) ;
une quantité nécessaire minimum de données vidéo à stocker après chaque trame clé (V') afin d'empêcher un soupassement dans le cas d'un changement de canal vers ce canal ; et
une quantité de données de trame non clé (V, A, CC) stockées depuis la dernière trame clé ;
et en écartant :
(i) les données stockées avant la dernière trame clé stockée si ladite quantité est supérieure ou égale à ladite quantité nécessaire minimum ; ou
(ii) les données stockées avant la deuxième jusqu'à la dernière trame clé stockée si ladite quantité est inférieure à ladite quantité nécessaire minimum ;
et **caractérisé en ce que** :
lors de la réception d'un signal de changement de canal identifiant un nouveau canal accordé ;
la délivrance, d'abord, en sortie des données de canal en provenance d'un dispositif de transmission en continu correspondant au nouveau canal accordé au lecteur multimédia (250) tout en continuant de délivrer en sortie les données de canal en provenance dudit premier canal accordé au lecteur multimédia (250) ; et
ensuite l'arrêt de la délivrance en sortie des données en provenance du dispositif de transmission en continu correspondant au premier canal accordé au lecteur multimédia (250).

2. Procédé selon la revendication 1, dans lequel ladite quantité nécessaire minimum de données de canal est propre au canal, et est fonction d'informations de mise en mémoire tampon présentes dans les données vidéo et/ou du débit du lecteur multimédia et/ou de la taille de paquet pour ce canal.

3. Procédé selon la revendication 1, dans lequel les données de canal pour ledit canal accordé sont écrites vers la sortie du dispositif de transmission en continu de ce canal, et les données de canal pour tous les autres canaux sont écrites vers une mémoire interne dans chacun desdits dispositifs de transmission en continu de canal non accordé.

4. Procédé selon la revendication 1, comprenant en outre :
la réception d'un signal de sélection de canal identifiant un canal nouvellement accordé ; et
la délivrance, d'abord, en sortie des données stockées en provenance du dispositif de transmission en continu du canal nouvellement accordé au lecteur multimédia, puis la délivrance en sortie des données nouvellement reçues en provenance dudit dispositif de transmission en continu du canal nouvellement accordé au lecteur multimédia.

5. Procédé selon la revendication 1, dans lequel les données de canal pour chaque canal accordé sont écrites vers la sortie du dispositif de transmission en continu en commençant au premier point d'entrée que rencontre le dispositif de transmission en continu.

6. Procédé selon la revendication 1, dans lequel les données de canal pour chaque canal non accordé sont écrites vers une mémoire tampon interne du dispositif de transmission en continu en commençant au premier point d'entrée que rencontre le dispositif de transmission en continu.

7. Procédé selon la revendication 1, comprenant en outre la délivrance en sortie des données pour le canal actuellement accordé à un démultiplexeur (230), de façon à séparer les trames vidéo, audio et d'informations, et la délivrance en sortie desdites trames démultiplexées audit lecteur multimédia.

8. Procédé selon la revendication 1, dans lequel ledit stockage d'une quantité minimum de données de canal dans une mémoire tampon dans chaque dispositif de transmission en continu pour chaque canal non accordé, comprend le maintien continu suffisant de données vidéo pour chaque tel canal afin d'empêcher un soupassement lors d'un changement de canal vers ce canal non accordé.

9. Procédé selon la revendication 1, dans lequel lesdits enregistrements et écartements comprennent :
le commencement à la dernière trame clé stockée dans la mémoire tampon et le travail en arrière tout au plus vers une deuxième dernière trame clé stockée dans la mémoire tampon ;
et, à chaque telle trame clé, le fait de déterminer si la quantité de données vidéo stockées après cette trame clé, est suffisante pour empêcher un soupassement lors d'un changement de canal, les données stockées précédemment à cette trame clé sont écartées.

10. Procédé selon la revendication 9, dans lequel ladite quantité de données vidéo stockées comprend des trames clés et des trames non clés.

11. Produit programme informatique comprenant un support utilisable par un ordinateur, qui présente des moyens de codes de programme lisibles par un ordinateur incorporés à l'intérieur, les moyens de codes de programme lisibles par un ordinateur dans ledit produit programme informatique comprenant des moyens pour faire exécuter par un ordinateur les étapes selon l'une quelconque des revendications 1 à 10.

12. Système de changement de canal rapide entre divers canaux à l'intérieur d'un multiplex de transport (205), comprenant :
un démultiplexeur de transport (210) recevant un multiplex de transport (205) et délivrant en sortie de manière simultanée un flux de données pour chaque canal en provenance d'une pluralité de canaux (Canal 1, Canal 2, ... , Canal N) dans le multiplex de transport ;
un ensemble de dispositifs de transmission en continu (220), un par canal dans ladite pluralité de canaux, chaque dit dispositif de transmission en continu (220) présentant une mémoire tampon et étant connecté de manière communicante à un flux de données de sortie en provenance du démultiplexeur de transport ;
un lecteur multimédia (250) connecté de manière communicante à la sortie de chaque dispositif de transmission en continu ; et au moins un processeur de données ;
dans lequel le au moins un processeur de données ;
reçoit un signal de sélection de canal identifiant un premier canal accordé ;
fait délivrer en sortie les données de canal en provenance d'un dispositif de transmission en continu (220) correspondant au premier canal accordé à un lecteur multimédia (250) ; et
pour tous les canaux non accordés, enregistre et maintient une quantité minimum de données de canal dans une mémoire tampon du dispositif de transmission en continu en enregistrant, pour chaque tel canal non accordé :
chaque position de départ de trame clé (V') dans la mémoire tampon (220) ;
une quantité nécessaire minimum de données vidéo à stocker après chaque trame clé (V') afin d'empêcher un soupassement dans le cas d'un changement de canal vers ce canal ; et
une quantité de données de trame non clé stockées depuis la dernière trame clé ;
et fait écarter :
les données stockées avant la dernière trame clé stockée si ladite quantité est supérieure ou égale à ladite quantité nécessaire minimum ; ou
les données stockées avant la deuxième jusqu'à la dernière trame clé stockée si ladite quantité est inférieure à ladite quantité nécessaire minimum ;
et **caractérisé en ce que** :
lors de la réception d'un signal de changement de canal identifiant un nouveau canal accordé ;
délivre d'abord en sortie les données de canal en provenance d'un dispositif de transmission en continu correspondant au nouveau canal accordé au lecteur multimédia (250) tout en continuant de délivrer en sortie les données de canal en provenance dudit premier canal accordé au lecteur multimédia (250) ; et
en arrêtant ensuite de délivrer en sortie les données en provenance du dispositif de transmission en continu correspondant au premier canal accordé au lecteur multimédia (250).

13. Système selon la revendication 12, dans lequel chaque dispositif de transmission en continu présente également un processeur de données de dispositif de transmission en continu, et le processeur de données envoie des signaux auxdits processeurs de données de dispositif de transmission en continu, qui font délivrer en sortie à un lecteur multimédia lesdites données de canal en provenance d'un dispositif de transmission en continu correspondant au canal accordé, et qui font stocker ladite quantité minimum de données de canal nécessaire pour empêcher un soupassement lors d'un changement de canal vers ce canal, dans une mémoire tampon dans chaque dispositif de transmission en continu pour chacun des canaux non accordés.

14. Système selon la revendication 13, comprenant en outre :
lorsque ledit processeur de données reçoit un second signal de sélection de canal identifiant un nouveau canal accordé ;
ledit processeur de données lit les données vidéo en provenance de la mémoire tampon dudit nouveau canal accordé en commençant par :
la dernière trame clé stockée si la quantité de données comprenant ladite dernière trame clé stockée et toutes les trames stockées par la suite, est supérieure ou égale à ladite quantité nécessaire minimum ; ou
de la deuxième à la dernière trame clé stockée si la quantité de données comprenant ladite dernière trame clé stockée et toutes les trames stockées par la suite, est inférieure à ladite quantité nécessaire minimum.

15. Procédé selon la revendication 1, comprenant en outre :
lors de la réception d'un deuxième signal de sélection de canal identifiant un nouveau canal accordé ;
la lecture des données vidéo en provenance de la mémoire tampon dudit nouveau canal accordé en commençant par :
la dernière trame clé stockée si la quantité de données comprenant ladite dernière trame clé stockée et toutes les trames stockées par la suite, est supérieure ou égale à ladite quantité nécessaire minimum ; ou
de la deuxième à la dernière trame clé stockée si la quantité de données comprenant ladite dernière trame clé stockée et toutes les trames stockées par la suite, est inférieure à ladite quantité nécessaire minimum.
